Europäisches Patentamt

(19) European Patent Office

Office européen des brevets

(11) Numéro de publication : **0 066 322**
**B1**

(12) **FASCICULE DE BREVET EUROPÉEN**

(45) Date de publication du fascicule du brevet :
01.10.86

(51) Int. Cl.⁴ : **G 01 B   3/10**

(21) Numéro de dépôt : **82200588.0**

(22) Date de dépôt : **14.05.82**

(54) **Dispositif de freinage d'un ruban de mesure métallique.**

(30) Priorité : **19.05.81 FR 8109925**

(43) Date de publication de la demande :
**08.12.82 Bulletin 82/49**

(45) Mention de la délivrance du brevet :
**01.10.86 Bulletin 86/40**

(84) Etats contractants désignés :
**AT DE GB IT NL SE**

(56) Documents cités :
**FR-A- 1 320 799**
**FR-A- 1 495 468**
**US-A- 2 132 202**
**US-A- 2 446 020**
**US-A- 2 934 827**
**US-A- 3 415 461**

(73) Titulaire : **STANLEY-MABO**
**Zone Industrielle Trépillot**
**F-25009 Besancon (FR)**

(72) Inventeur : **Scandella, Louis**
**Chambornay les Pins**
**F-70150 Marnay (FR)**

(74) Mandataire : **Jörchel, Dietrich R.A.**
**c/o BUGNION S.A. 10, route de Florissant Case**
**postale 375**
**CH-1211 Genève 12 Champel (CH)**

Jouve, 18, rue St-Denis, 75001 Paris, France

## Description

L'invention se rapporte à un dispositif de freinage d'un ruban de mesure métallique, enroulable dans un boîtier sous l'action d'un ressort de rappel, comprenant des moyens excentriques constituant le sabot de freinage, formés intégralement avec leur pivot lequel est disposé parallèlement à la direction de sortie du ruban et est lui-même venu d'une pièce avec un organe de manœuvre extérieur au boîtier et traversant un orifice dans une paroi latérale de celui-ci, le pivot et l'organe de manœuvre formant entre eux un angle de 90°, dont le sommet est tronqué et les moyens excentriques étant déplaçables, sous l'action de l'organe de manœuvre, entre une première position dans laquelle ils bloquent le ruban contre une partie fixe du boîtier et une deuxième position dans laquelle ils libèrent ledit ruban.

Des dispositifs de freinage par excentrique sont connus depuis longtemps et ont fait leur preuve quant à leur efficacité. Ils permettent en effet d'obtenir un freinage progressif du ruban jusqu'à une position de blocage dans laquelle le ruban ne peut être tiré hors du boîtier par l'utilisateur ou rentré dans le boîtier sous l'action de son ressort de rappel.

Selon le brevet français No 1.495.468 il est déjà connu d'avoir un excentrique qui d'après la figure et bien que cela ne soit pas décrit explicitement, forme une seule pièce avec son axe de pivotement et qui est fixé à un levier extérieur. Dans ce cas cependant, l'excentrique agit sur le ruban par l'intermédiaire d'un renflement porté par une lame ressort. Pour cette raison, le profilé de l'excentrique a une forme spécialement adaptée.

Un autre dispositif est décrit par exemple dans le brevet français No 1.320.799 dans lequel on peut voir une came excentrique montée pivotante autour d'un axe fixé dans le boîtier et solidaire d'un doigt de commande extérieur au boîtier. Ce dispositif connu comporte donc plusieurs pièces constitutives, à savoir la came, son axe de pivotement et le doigt de commande extérieur, et l'assemblage de ces différents éléments dans le boîtier est peu commode et ralentit la phase de montage de l'instrument.

Un autre exemple de levier de blocage excentrique formé d'une pièce avec son levier de manœuvre est décrit dans le brevet US No 3.415.461 dans lequel le levier de blocage et le levier de manœuvre forment entre eux un angle de 90° dont le sommet est tronqué. Le levier de blocage muni de projections formant excentrique, est introduit dans le boîtier, depuis l'extérieur, à travers un orifice en forme de trou de serrure et est empêché de ressortir, une fois tous les éléments montés, grâce au rebord du tambour d'enroulement qui obstrue partiellement ledit orifice. Bien que le levier de blocage ne puisse pas ressortir du boîtier une fois tous les éléments montés à cause du rebord du tambour d'enroulement, il n'est pas réellement maintenu et peut bouger et l'assemblage des divers éléments est délicat.

Il existe d'autres dispositifs dans lesquels le levier de blocage est monté entièrement dans le boîtier, par exemple celui décrit dans le brevet US No 2.132.202 dans lequel le levier de freinage est constitué par un bouton-poussoir transversal dont la partie centrale a une portion réduite et qui agit sur un sabot de freinage en contact avec le ruban. Dans ce cas, également, l'assemblage des différentes pièces est délicat.

La présente invention se propose de créer un dispositif de freinage simple, bon marché et surtout facile à monter.

A cet effet, le dispositif est caractérisé par le fait que le pivot est muni dans sa région de raccordement avec l'organe de manœuvre d'une portée circulaire prévue pour s'ajuster à frottement gras dans un palier formé par l'orifice traversant la paroi latérale du boîtier, à proximité de la fente de sortie du ruban, cette portée circulaire étant munie d'un méplat sur sa face dirigée vers l'intérieur de l'angle droit tandis que la face correspondante de l'organe de manœuvre est entièrement plane, ledit organe de manœuvre ayant une section transversale plus petite que le diamètre de l'orifice, le tout étant agencé de manière que l'ensemble formé par le pivot et l'organe de manœuvre peut être monté depuis l'intérieur du boîtier, l'organe de manœuvre traversant perpendiculairement l'orifice pour être ensuite basculé de 90° et venir s'appliquer par sa face plane contre la face externe de la paroi latérale du boîtier, tandis que la portée circulaire prend place dans ledit orifice, que le pivot se trouve être perpendiculaire à la paroi latérale du boîtier et s'étend parallèlement au-dessus de la sortie du ruban et que l'extrémité libre du pivot est supportée par un palier formé sur la face interne de la paroi latérale opposée du boîtier.

Les avantages obtenus grâce à cette invention consistent essentiellement en ce que l'on réalise un organe de blocage robuste, formé d'une seule pièce et dont le montage dans le boîtier est très facile et rapide. De plus, dès qu'il est monté dans la paroi latérale, cet organe a une bonne stabilité.

L'invention sera bien comprise à l'aide de la description qui suit faite en référence aux dessins annexés dans lesquels :

La figure 1 est une vue du boîtier ouvert avec le ruban de mesure légèrement tiré et le frein en position de blocage.

La figure 2 est une vue de la face intérieure du couvercle.

La figure 3 est une vue de profil de l'organe de blocage.

La figure 4 en est une vue de face.

La figure 5 en est une vue de dessus.

La figure 6 est une vue de profil du boîtier assemblé avec coupe partielle au niveau de l'organe de blocage.

La figure 7 est une vue partielle et agrandie de la figure 6 au niveau de l'orifice de passage de l'organe de blocage.

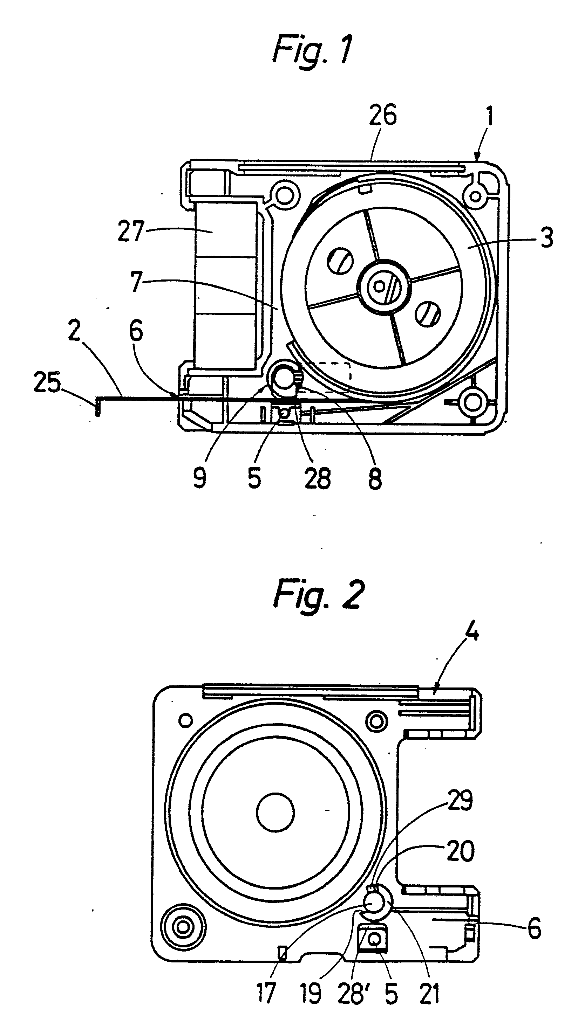

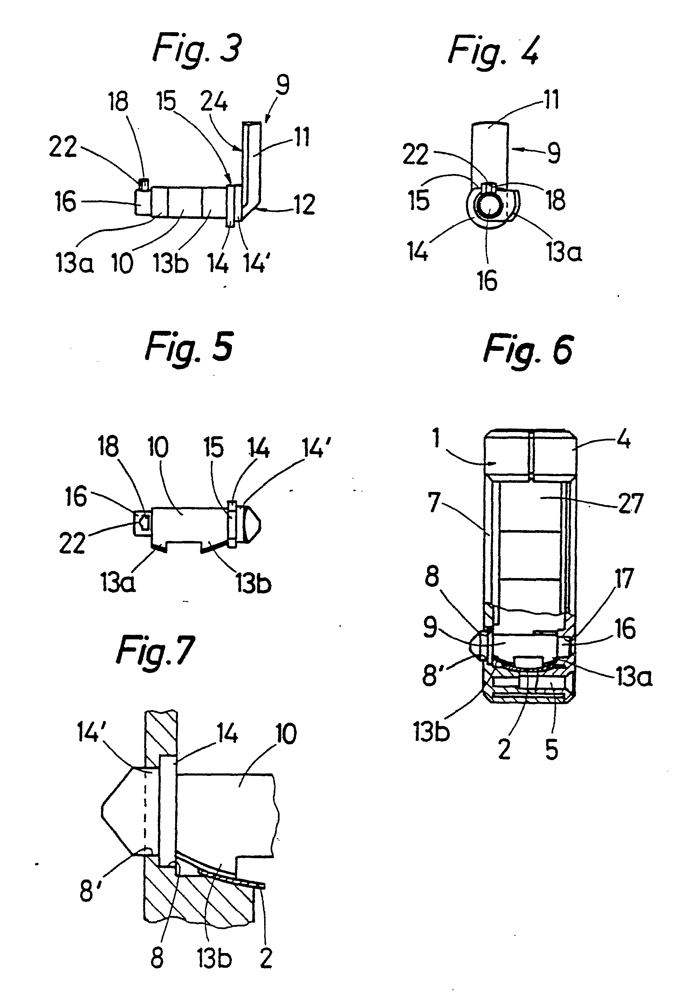

Ainsi que cela est représenté sur les figures 1, 2 et 5, l'instrument comprend un boîtier formé de deux parties, une partie creuse 1 destinée à recevoir le ruban de mesure 2 enroulé sur un tambour et qui, dans la forme d'exécution représentée, a été préalablement introduit dans une cartouche 3, et un couvercle 4 qui se fixe sur la partie creuse 1 au moyen de vis traversant des orifices appropriés 5 formés aux quatre coins du boîtier et dont un seul a été référencé sur les figures. A proximité de la fente 6 de sortie du ruban 2, la paroi latérale 7 de la partie creuse 1 est munie d'un orifice 8, 8' (fig. 6 et 7) destiné à recevoir l'organe de blocage 9 lequel va être expliqué plus en détail ci-après en référence aux figures 3, 4 et 5.

Cet organe de blocage 9 a donc une forme générale de levier coudé à angle droit dont le premier bras constitue le pivot 10 avec les excentriques 13a, 13b tandis que le deuxième bras constitue l'organe de manœuvre 11. Le sommet de l'angle droit formé par le pivot 10 et l'organe de manœuvre 11 est tronqué en 12, à environ 45°, pour des raisons qui seront expliquées ultérieurement. Le pivot 10 est muni de deux excentriques 13a, 13b écartés l'un de l'autre qui constituent deux sabots de freinage agissant sur les bords extérieurs du ruban. Ces excentriques sont destinés, en position de travail, à venir coïncer le ruban 2 contre une pièce d'appui 28, 28' formée sur chacune des deux parois latérales du boîtier. Ces excentriques 13a, 13b ont par ailleurs une forme arquée qui permet d'obtenir un freinage progressif du ruban sans risque de détérioration.

Le pivot 10 comporte en outre dans sa région de raccordement avec l'organe de manœuvre 11 une portée circulaire à deux étages 14, 14' comprenant une première face de portée 14 et une deuxième face de portée 14' adjacente, plus petite, la première face de portée 14 étant munie d'un méplat 15. Ces deux faces de portée 14, 14' sont prévues pour s'ajuster à frottement gras dans l'orifice étagé 8, 8' de la paroi latérale 7 du boîtier, le diamètre réduit 8' étant dirigé vers l'extérieur. Le fait d'avoir une portée circulaire 14, 14' étagée qui s'ajuste dans un orifice correspondant 8, 8' de la paroi améliore encore la stabilité du pivot 10 dans l'orifice 8.

Le méplat 15 sur la portée circulaire 14 du pivot 10 est dirigé vers l'intérieur de l'angle droit sur la face qui est adjacente à la face munie des excentriques 13a, 13b. L'extrémité libre 16 du pivot 10 a un diamètre réduit et est prévue pour se loger dans un palier 17 formé dans la deuxième partie du boîtier ou couvercle 4 (fig. 2 et 5), un téton 18 situé sur la face du pivot dirigée vers l'intérieur de l'angle droit permet de limiter le déplacement angulaire du pivot, une fois monté, en coopérant avec deux butées 19, 20 formées par les faces d'extrémité d'une nervure arquée 21 entourant le palier 17 (fig. 2). Par ailleurs une petite protubérance 22 est formée sur la face du téton en contact avec la paroi intérieure du couvercle 4 et est destinée à venir se loger dans un logement correspondant 29 formé en avant de la butée 20 pour définir une position limite de déblocage stable.

L'organe de manœuvre 11 qui est, comme déjà mentionné précédemment, formé d'une pièce avec le pivot 10 a une épaisseur égale à approximativement la moitié de l'épaisseur du pivot 10 et sa face 24 dirigée vers l'intérieur de l'angle droit est entièrement plane ; sa face dirigée vers l'extérieur de l'angle droit peut avoir une forme quelconque, arrondie, carrée, angulaire, etc.

Lors du montage de l'instrument, on introduit en premier lieu l'organe de manœuvre dans l'orifice 8 en le présentant depuis l'intérieur de la partie 1 du boîtier, perpendiculairement à la face latérale 7, de manière que la face du pivot munie des excentriques 13a, 13b soit dirigée vers la direction de sortie du ruban. Cette introduction est naturellement limitée par le pivot 10 qui vient buter contre la face interne de la paroi latérale 7. A ce moment, il suffit de faire basculer l'organe de manœuvre 11 de 90° en forçant légèrement pour que sa face plane 24 vienne s'appliquer contre la face externe de la paroi latérale 7 tandis que la portée circulaire 14, 14' prend place dans l'orifice 8, 8' et que le pivot 10 se trouve être alors perpendiculaire à la paroi latérale 7 et par conséquent parallèle à la direction de sorite du ruban 2. Cette manipulation du pivot et de l'organe de manœuvre est rendue possible d'une part grâce au sommet tronqué 12 du pivot 10 et d'autre part grâce au méplat 15 sur la portée circulaire 14.

L'organe de freinage constitué du pivot avec les excentriques se trouve ainsi, en une seule opération, rapide et facile à exécuter, monté d'une manière tout à fait stable dans la première partie 1 du boîtier. Il suffit alors de monter le ruban 2 et sa cartouche 3 à l'emplacement voulu, de faire sortir du boîtier l'extrémité du ruban 2 munie de la manière usuelle d'un crochet d'extrémité 25 et de fermer le boîtier au moyen du couvercle 4 tenu par des vis non représentées, l'extrémité réduite 16 du pivot 10 venant s'ajuster d'elle-même dans le palier 17 du couvercle. Dans la forme d'exécution représentée, le boîtier est en outre muni d'une fenêtre de lecture 26 pour les mesures internes, ainsi que d'un niveau 27. Bien entendu, ce dispositif de freinage peut être monté sur n'importe quel type de boîtier avec le ruban enroulé dans une cartouche ou non.

Quand le dispositif de freinage est dans sa position de repos, non représentée, les excentriques 13a, 13b du pivot 10 sont éloignés de la trajectoire du ruban 2. En basculant l'organe de manœuvre 11 on fait pivoter le pivot 10 et par conséquent les excentriques 13a, 13b, sont amenés au-dessus de la trajectoire du ruban 2, coinçant celui-ci contre les pièces d'appui 28, 28'. Grâce à leur forme arquée, les excentriques 13a, 13b, exercent une force suffisante sur le ruban et les pièces d'appui 28, 28' pour obtenir une position stable de freinage.

**Revendications**

1. Dispositif de freinage d'un ruban de mesure métallique, enroulable dans un boîtier sous l'action d'un ressort de rappel, comprenant des moyens excentriques constituant le sabot de freinage, formés intégralement avec leur pivot lequel est disposé parallèlement à la direction de sortie du ruban et est lui-même venu d'une pièce avec un organe de manœuvre extérieur au boîtier et traversant un orifice dans une paroi latérale de celui-ci, le pivot et l'organe de manœuvre formant entre eux un angle de 90° dont le sommet est tronqué, et les moyens excentriques étant déplaçables, sous l'action de l'organe de manœuvre, entre une première position dans laquelle ils bloquent le ruban contre une partie fixe du boîtier et une deuxième position dans laquelle ils libèrent ledit ruban, caractérisé par le fait que le pivot (10) est muni dans sa région de raccordement avec l'organe de manœuvre (11) d'une portée circulaire (14) prévue pour s'ajuster à frottement gras dans un palier formé par l'orifice (8) traversant la paroi latérale (7) du boîtier, à proximité de la fente de sortie du ruban, cette portée circulaire (14) étant munie d'un méplat (15) sur sa face dirigée vers l'intérieur de l'angle droit tandis que la face correspondante (24) de l'organe de manœuvre (11) est entièrement plane, ledit organe de manœuvre (11) ayant une section transversale plus petite que le diamètre de l'orifice (8), le tout étant agencé de manière que l'ensemble formé par le pivot et l'organe de manœuvre peut être monté depuis l'intérieur du boîtier (1), l'organe de manœuvre traversant perpendiculairement l'orifice (8) pour être ensuite basculé de 90° et venir s'appliquer par sa face plane (24) contre la face externe de la paroi latérale du boîtier, tandis que la portée circulaire (14) prend place dans ledit orifice (8), que le pivot (10) se trouve être perpendiculaire à la paroi latérale (7) du boîtier et s'étend parallèlement au-dessus de la sortie du ruban (2) et que l'extrémité libre (16) du pivot (10) est supportée par un palier (17) formé sur la face interne de la paroi latérale opposée (4) du boîtier.

2. Dispositif selon la revendication 1, caractérisé par le fait que l'extrémité libre (16) du pivot est munie d'un téton (18) qui coopère avec deux butées (19, 20) formées sur la face interne du boîtier pour limiter le déplacement angulaire du pivot (10) et donc de l'excentrique (13a, 13b) et que cette extrémité (16) a préférablement un diamètre réduit.

3. Dispositif selon la revendication 2, caractérisé par le fait que les deux butées (19, 20) sont constituées par les faces d'extrémité d'une nervure arquée (21) entourant le palier (17).

4. Dispositif selon la revendication 2, caractérisé par le fait que le téton (18) est en outre muni d'une projection latérale (22) qui coopère avec un logement (29) adjacent à l'une des butées (20) pour déterminer une position limite stable du pivot et par conséquent de l'excentrique.

5. Dispositif selon la revendication 1, caractérisé par le fait que la portée circulaire (14, 14') du pivot (10) est étagée et que l'orifice (8, 8') dans la paroi latérale (7) du boîtier est lui-même étagé.

## Claims

1. Lock and automatic rewind switch device for a flexible steel measure adapted to be rewound in a case by a return spring, which comprises eccentric means constituting the lock shoe, said means being formed integrally with the pivot pin extending parallel to the direction in which the tape is pulled out from the case, said pivot pin being furthermore an integral part of a control member disposed externally of the case and extending through a hole in a side wall of said case, said pivot pin and control member forming a 90-degree angle with each other, said angle having a truncated vertex, said eccentric means being adapted to be moved by actuating said control member from a first position in which said control means lock said tape against a fixed portion of said case to a second position in which said tape is released, wherein said pivot pin (10) comprises in its area adjacent said truncated vertex an annular journal (14) which is a free fit in a bearing consisting of said hole (8) formed through said side wall (7) of the case, adjacent the slot through which the flexible tape is pulled out from the case, said annular journal (14) having a flat surface (15) on its inner side which is directed inwards of said 90-degree angle, the corresponding surface (24) of said control member (11) being completely flat, said control member (11) having a cross section smaller than the diameter of said hole (8), the arrangement being such that said pivot pin and control member assembly can be fitted in position from inside the case (1), said control member extending at right angles through said holes (8) and being subsequently adapted to rotate through 90 degrees so that is flat surface (24) can engage the outer surface of said side wall of the tape measure case, said annular journal (14) engaging said hole (8), said pivot pin (10) extending at right angles to said side wall (7) of case (1) and parallel to the top surface of the tape (2) and the free end (16) of said pivot pin (10) being supported by a bearing (17) formed on the inner face of the opposite side wall (4) of said case (1).

2. The device of claim 1, wherein said free end (16) of said pivot pin (10) carries a stud (18) adapted to cooperate with a pair of end stops (19, 20) formed on the inner surface of said case for limiting the permissible angular movement of said pivot pin (10) and consequently of said eccentric means (13a, 13b), said free end (16) having preferably a reduced diameter.

3. The device of claim 2, wherein said pair of end stops (19, 20) consist of the end faces of an arcuate rib (21) surrounding said bearing (17).

4. The device of claim 2, wherein said stud (18) is further provided with a lateral projection (22) adapted to cooperate with a recess (29) adjacent one of said end stops (20) to determine a stable limit position of said pivot pin (10) and consequently of said eccentric means (13a, 13b).

5. The device of claim 1, wherein said annular journal (14, 14') of pivot pin (10) is stepped and said hole (8, 8') formed in the side wall (7) of the case is also stepped.

## Patentansprüche

1. Bremsvorrichtung für ein metallisches Messband, das in einem Gehäuse unter der Wirkung einer Rückholfeder aufspulbar ist, mit den Bremsschuh bildenden Exzentermitteln, die einteilig mit ihrem Drehzapfen ausgebildet sind, welcher parallel zur Austrittsrichtung des Bandes orientiert ist und seinerseits ein Teil mit dem aussen am Gehäuse befindlichen Bedienungsorgan bildet und eine Oeffnung in einer Seitenwand des Gehäuses durchsetzt, wobei der Drehzapfen und des Bedienungsorgan miteinander einen Winkel von 90° bilden, dessen Scheitel abgeschrägt ist, und wobei die Exzentermittel unter der Wirkung des Bedienungsorgans zwischen einer ersten Stellung, in der sie das Band gegen einen festen Teil des Gehäuses blockieren, und einer zweiten Stellung verstellbar sind, in welcher sie das erwähnte Band freigeben, dadurch gekennzeichnet, dass der Drehzapfen (10) in seinem Bereich, in welchem er mit dem Bedienungsorgan (11) verbunden ist, eine kreisförmige Lagerfläche (14) aufweist, die mit satter Reibung in die ein Lager bildende Oeffnung (8) eingesetzt ist, welche die Seitenfläche (7) des Gehäuses in der Nähe des Austrittsschlitzes für das Band durchsetzt, dass diese kreisformige Lagerfläche (14) mit einer Abflachung (15) auf ihrer ins Innere des rechten Winkels weisenden Fläche versehen ist, während die entsprechende Fläche (24) des Bedienungsorgans (11) vollstandig eben ist, und dass das erwähnte Bedienungsorgan (11) einen Querschnitt hat, der kleiner als der Durchmesser der Oeffnung (8) ist, derart, dass das durch den Drehzapfen und das Bedienungsorgan gebildete Teil vom Innern des Gehäuses (1) her montierbar ist, wobei das Bedienungsorgan die Oeffnung (8) zunächst senkrecht durchsetzt und dann um 90° gekippt wird und mit seiner ebenen Fläche (24) gegen die äussere Fläche der Seitenwand des Gehäuses zur Anlage kommt, während die kreisförmige Lagerfläche (14) in die erwähnte Oeffnung (8) eingreift, der Drehzapfen (10) senkrecht zur Seitenwand (7) des Gehäuses ausgerichtet ist und sich parallel oberhalb des Austritts des Bandes (2) erstreckt und das freie Ende (16) des Drehzapfens (10) sich an einem Lager (17) abstützt, welches auf der Innenfläche der gegenüberliegenden Seitenwand (4) des Gehäuses angeformt ist.

2. Bremsvorrichtung nach Anspruch 1, dadurch gekennzeichnet, dass das freie Ende (16) des Drehzapfens mit einer Nase (18) versehen ist, die mit zwei an der Innenfläche des Gehäuses angeformten Anschlägen (19, 20) zusammenwirkt, um die Winkelverschiebung des Drehzapfens (10) und damit des Exzenters (13a, 13b) zu begrenzen, und dass dieses Ende (16) vorzugsweise einen verringerten Durchmesser hat.

3. Bremsvorrichtung nach Anspruch 2, dadurch gekennzeichnet, dass die beiden Anschläge (19, 20) durch die Endflächen einer gebogenen Rippe (21) gebildet sind, welche das Lager (17) umgibt.

4. Bremsvorrichtung nach Anspruch 2, dadurch gekennzeichnet, dass die Nase (18) ausserdem mit einem seitlichen Vorsprung (22) versehen ist, welcher mit einer neben einem der Anschläge (20) vorgesehenen Oeffnung (29) zusammenwirkt, um eine stabile Bremsstellung des Drehzapfens und damit des Exzenters festzulegen.

5. Bremsvorrichtung nach Anspruch 1, dadurch gekennzeichnet, dass die kreisförmige Lagerfläche (14, 14') des Drehzapfens (10) gestuft ist und dass die Oeffnung (8, 8') in der Seitenwand (7) des Gehäuses ihrerseits gestuft ist.

## Fig. 1

## Fig. 2

## Fig. 3

## Fig. 4

## Fig. 5

## Fig. 6

## Fig. 7